# EUROPÄISCHE PATENTSCHRIFT

(11) **EP 2 134 774 B1**
(45) Veröffentlichungstag und Bekanntmachung des Hinweises auf die Patenterteilung: **10.05.2017**
(21) Anmeldenummer: 08717323.3
(22) Anmeldetag: 03.03.2008
(51) Int. Cl.: C08J 9/00, C08K 3/00, C08K 5/00, C08J 9/20, C08J 9/36, A01N 25/16, A01N 25/34

(54) **ANTIMIKROBIELL MODIFIZIERTER MELAMIN/FORMALDEHYD-SCHAUMSTOFF**
ANTIMICROBIALLY MODIFIED MELAMINE/FORMALDEHYDE FOAM
MOUSSE DE MÉLAMINE/FORMALDÉHYDE À MODIFICATION ANTI-MICROBIENNE

(30) Priorität: 12.03.2007 EP 07103918
(43) Veröffentlichungstag der Anmeldung: 23.12.2009
(73) Patentinhaber: BASF SE, 67056 Ludwigshafen am Rhein (DE)
(72) Erfinder: ALTEHELD, Armin, 55543 Bad Kreuznach (DE); HAHN, Klaus, 67281 Kircheim (DE); MÖCK, Christof, 68259 Mannheim (DE); VATH, Bernhard, 68259 Mannheim (DE); SCHIERHOLZ, Jens-Uwe, 64625 Bensheim (DE)
(86) Internationale Anmeldenummer: PCT/EP2008/052560
(87) Internationale Veröffentlichungsnummer: WO 2008/110475

(56) Entgegenhaltungen:
- EP-A- 0 220 506
- EP-A- 1 486 523
- WO-A-01/94436
- WO-A-98/59026
- WO-A-2006/077239
- WO-A-2006/078358
- WO-A-2007/110361
- WO-A-2008/049831
- WO-A1-2006/051048
- DE-A1- 2 125 956
- US-A- 4 877 816
- "Foamed Plastics" In: "Ullmann's Encyclopaedia of Industrial Chemistry", 2003, WILEY-VCH vol. 14, pages 561-562,

## Beschreibung

Die vorliegende Erfindung betrifft ein Verfahren zur Herstellung eines Schaumstoffes enthaltend wenigstens einen antimikrobiellen Wirkstoff, einen so hergestellten Schaumstoff, ein Formteil, enthaltend den erfindungsgemäßen Schaumstoff und die Verwendung dieses Schaumstoffes zur Wärme- und Schalldämmung, als Verpackungsmaterial, als Reinigungsschwämme, im Hygienesektor und als Filtermaterial, beispielsweise in Klimaanlagen.

Materialien bzw. Kunststoffe, welche mit antimikrobiell wirksamen Stoffen ausgestattet sind, sind aus dem Stand der Technik bereits bekannt.

US 2005/0154361 A1 offenbart ein Material mit einer harten Oberfläche, welches ein antimikrobiell wirksames Reagenz in einer Harzmatrix enthält, wobei das antimikrobielle Reagenz ein Chitosan-Metallkomplex ist. Das antimikrobiell wirksame Reagenz wird zur Herstellung des Materials zu den Harzkomponenten gegeben, bevor diese mit weiteren Inhaltsstoffen vermischt und polymerisiert werden. US 2005/0154361 A1 offenbart ein Material mit einer harten Oberfläche, beispielsweise als Materialien zum Bedecken von Fußböden oder Wänden. Dieses Dokument offenbart keinen weichen Schaumstoff, welcher ein antimikrobiell wirksames Reagenz aufweist.

DE 1 180 486 offenbart verschiedene Kunststoffe, welche mit antimikrobiell wirksamen Reagenzien ausgestattet sind. Geeignete Kunststoffe sind Polyvinylchlorid, Polystyrol, Polyesterharze, natürliche und synthetische Kautschuke, Polyurethane, ferner Cellulose und deren Umwandlungsprodukte, wie Papier, Celluloseacetat und Celluloseacetobutyrat. Der antimikrobiell wirksame Wirkstoff kann gemäß diesem Dokument während der Herstellung, beispielsweise während einer Polykondensation, zugegeben werden. DE 1 180 486 offenbart Kunststoffe, welche antimikrobielle Substanzen aufweisen, und welche zu Folien, Profilen und Platten verarbeitet werden. Das genannte Dokument offenbart keine antimikrobiell ausgestatteten Schaumstoffe.

WO 2005/054566 A1 offenbart eine Zusammensetzung zur Unterdrückung des Wachstums von Mikroorganismen auf nicht-natürlichen Fasern, umfassend wenigstens ein selbst vernetzendes Harz, wenigstens einen Katalysator, wenigstens ein antimikrobiell wirksames Reagenz, welches mit dem Harz reagieren kann und Wasser. Die nicht natürlichen Fasern gemäß diesem Dokument sind Fasern auf Basis von Polyestern, Polyamiden, Polypropylen, Polyurethanen und Celluloseacetat. Das antimikrobiell wirksame Reagenz wird auf die nicht-natürlichen Fasern durch das selbstvernetzende Harz aufgebracht, ohne dass ionische oder kovalente Bindungen zwischen den Fasern und dem Reagenz bestehen. WO 2005/054566 A1 offenbart keine Schaumstoffe, welche antimikrobiell wirksame Wirkstoffe enthalten.

US 6,375,964 B1 offenbart ein Reinigungsmaterial zur Reinigung von Oberflächen umfassend eine geschäumte Zellstruktur, welche eine antimikrobiell wirksame Zusammensetzung enthält. Die geschäumte Matrix ist ein Polyurethan-Schaum und die antimikrobielle Zusammensetzung enthält eine Silberionenquelle. Der Polyurethanschaum gemäß US 6,375,964 B1 wird hergestellt, indem der Polyurethanschaum aus einer stöchiometrischen Mischung von Diisocyanat und Polyol gebildet wird, und die antimikrobiell wirksame Zusammensetzung darin eingebracht wird. US 6,375,964 B1 offenbart kein Verfahren zur Herstellung eines Schaumstoffes enthaltend wenigstens einen antimikrobiellen Wirkstoff, bei dem der Wirkstoff zu einer Lösung oder einer Dispersion des Schaumstoff-Vorkondensates gegeben wird, und anschließend aufgeschäumt wird. Des Weiteren offenbart das genannte Dokument keinen Schaumstoff auf Basis eines Melamin-Formaldehyd-Kondensationsproduktes, der wenigstens einen darin gleichmäßig verteilten antimikrobiellen Wirkstoff aufweist.

US 2005/0241480 A1 offenbart ein poröses Filtermedium zur Extraktion von Kohlenwasserstoffen aus Abgasen von Kraftfahrzeugen. Das poröse Filtermedium ist ein Schaumstoff auf Basis eines Melamin-Formaldehyd-Kondensationsproduktes, auf den eine Beschichtung mit antimikrobiell wirksamen Substanzen aufgebracht worden ist. Da der antimikrobiell wirksame Stoff nachträglich auf den Schaumstoff aufgebracht wird, befindet sich dieser lediglich auf dessen Oberfläche. Des Weiteren umfasst die Herstellung eines solchen beschichteten Schaumstoffes einen weiteren Verfahrensschritt, nämlich das Beschichten des Schaumstoffes.

WO 2006/077239 A1 offenbart ein Verfahren zur Reinigung von Oberflächen, bei dem Aminoplastschaumstoffstücke verwendet werden. Diese Aminoplastschaumstoffstücke werden aus offenzelligen Aminoplastschaumstoffen oder offenzelligen Aminoplastschaumstoffen, die man mit einer wässrigen Formulierung von mindestens einer Verbindung mit mindestens einer Halbaminal- oder Aminalgruppe pro Molekül oder mindestens einem Copolymer, das mindestens ein OH-Gruppen-haltiges oder β-Dicarbonyl-Gruppen-haltiges oder Epoxid-Gruppen-haltiges Comonomer einpolymerisiert enthält, behandelt hat, hergestellt.

WO 01/94436 A2 offenbart ein Verfahren zur Herstellung von Schaumstoffen aus Melamin/Formaldehyd-Kondensaten, wobei ein Vorkondensat auf Basis von Melamin und Formaldehyd verschäumt wird. Übliche Zusatzstoffe, wie Farbstoffe, Flammschutzmittel, UV-Stabilisatoren, Mittel zur Herabsetzung der Brandgastoxizität oder zur Förderung der Verkohlung können zugesetzt werden.

EP 0 220 506 A2 offenbart Schaumstoffe aus Melamin/Formaldehyd-Kondensationsprodukten, die durch Aufschäumen und Tempern einer wässrigen Lösung oder Dispersion von Melamin/Formaldehyd-Vorkondensaten, enthaltend basisches Kupfercarbonat, hergestellt werden.

WO 2007/110361 A1 lehrt Schaumstoffe aus Melamin/Formaldehyd-Kondensationsprodukten, die durch Aufschäumen und Tempern einer wässrigen Lösung oder Dispersion von Melamin/Formaldehyd-Vorkondensaten, enthaltend als Additive beispielsweise Zinkdistearat, hergestellt werden.

WO 2006/051048 offenbart antimikrobiell ausgestattete Polymerzusammensetzungen. Zur Herstellung der Polymere werden antimikrobiell wirkende Additive in die vollständig polymerisierten und quervernetzten Polymere eingebracht, insbesondere durch Dry-Blending oder als Pulver, durch Nassmischen in der Form von Lösungen, Dispersionen oder Suspensionen.

Ullmann's Encyclopedia of Industrial Chemistry, Volume 14, 2003, Seiten 561 und 562 offenbart, dass ein flexibler elastischer Schaum hergestellt werden kann, wobei ein Tensid verwendet wird, um Pentan in ein Melamin-Formaldehyd-Präkondensat zu emulgieren. Das Aushärten setzt bei Zugabe von Ameisensäure ein. Eine kontrollierte Expansion wird durch Erhitzen initiiert.

Aufgabe der vorliegenden Erfindung ist es, ein Verfahren zur Herstellung eines Schaumstoffes enthaltend wenigstens einen antimikrobiellen Wirkstoff bereitzustellen, welches es ermöglicht, den antimikrobiellen Wirkstoff gleichmäßig in dem gesamten Schaumstoff zu verteilen. Des Weiteren soll durch das Verfahren vermieden werden, dass ein zusätzlicher Verfahrensschritt, das Aufbringen eines antimikrobiellen Wirkstoffs auf den fertigen Schaumstoff, notwendig ist. Eine weitere Aufgabe der vorliegenden Erfindung ist es, einen Schaumstoff bereitzustellen, der aufgrund der Verteilung des antimikrobiellen Wirkstoffes darin eine langsame Freisetzung des Wirkstoffes aus dem Schaumstoffmatrixmaterial zeigt.

Diese Aufgaben werden gelöst durch ein Verfahren zur Herstellung eines Schaumstoffes auf Basis eines Melamin/Formaldehyd-Kondensationsproduktes, enthaltend wenigstens einen antimikrobiellen Wirkstoff, umfassend die Schritte:
(1) Herstellen einer Lösung oder Dispersion enthaltend wenigstens ein sulfitgruppenfreies Vorkondensat des herzustellenden Schaumstoffes mit einem Molverhältnis von Melamin zu Formaldehyd von 1 : 1,3 bis 1 : 1,8 und wenigstens einen antimikrobiellen Wirkstoff,
(2) Aufschäumen des Vorkondensates durch Erhitzen der Lösung oder Dispersion aus Schritt (1), um einen Schaumstoff zu erhalten, der wenigstens einen antimikrobiellen Wirkstoff enthält und
(3) Tempern des in Schritt (2) erhaltenen Schaumstoffes bei einer Temperatur von 120 bis 300 °C, wobei der wenigstens eine antimikrobielle Wirkstoff ausgewählt ist aus der Gruppe bestehend aus Silbersalzen und organischen Bioziden ausgewählt aus Chloroisocyanuraten, Hydantoinen, Chlor-methyl-isothiazolinon, Parabenen, Triclosan, 2-Bromo-2-nitro-propan-1,3-diol, Phenoxyethanol, Hexahydrotriazinen und Mischungen davon.

Die einzelnen Schritte (1) bis (3) werden im Folgenden näher beschrieben:
Schritt (1):
   Schritt (1) des erfindungsgemäßen Verfahrens umfasst das Herstellen einer Lösung oder Dispersion enthaltend wenigstens ein Vorkondensat des herzustellenden Schaumstoffes und wenigstens einen antimikrobiellen Wirkstoff.

Dabei geht man von einem Melamin/Formaldehyd-Vorkondensat, aus. Daher ist der Schaumstoff ein Schaumstoff auf Basis eines Melamin/Formaldehyd-Kondensationsproduktes.

Melamin/Formaldehyd-Kondensationsprodukte können neben Melamin bis zu 50 Gew.-%, vorzugsweise bis 20 Gew.-% anderer Duroplastbildner und neben Formaldehyd bis zu 50 Gew.-%, vorzugsweise bis zu 20 Gew.-% anderer Aldehyde einkondensiert enthalten. Besonders bevorzugt ist ein unmodifiziertes Melamin/Formaldehyd-Kondensationsprodukt. Als Duroplastbildner können beispielsweise Alkyl- und Arylsubstituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate eingesetzt werden.

Als Aldehyde können zum Beispiel Acetaldehyd, Trimethylolacetaldehyd, Acrolein, Benzaldehyd, Furfural, Glyoxal, Glutaraldehyd, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402.

Das Molverhältnis Melamin zu Formaldehyd in dem Vorkondensat liegt
im Bereich von 1 : 1,3 bis 1 : 1,8 und es wird ein sulfitgruppenfreies Vorkondensat eingesetzt, wie z. B. in WO 01/94436 beschrieben.

Die erfindungsgemäß einsetzbaren Melaminharz-Vorkondensate enthalten keine Sulfitgruppen, d.h. der Sulfitgruppengehalt sollte unter 1%, bevorzugt unterhalb 0,1%, besonders bevorzugt 0% betragen.

Die Lösung bzw. Dispersion enthaltend wenigstens ein Vorkondensat des herzustellenden Schaumstoffes und wenigstens einen antimikrobiellen Wirkstoff kann nach dem Fachmann bekannten Verfahren hergestellt werden. In einer bevorzugten Ausführungsform wird das entsprechende Vorkondensat in Wasser hergestellt. Es können bei der Herstellung des Vorkondensates Alkohole, beispielsweise Methanol, Ethanol oder Butanol zugesetzt werden, um teilweise oder vollständig veretherte Kondensate zu erhalten. Nach beendeter Reaktion wird die entsprechende Menge des wenigstens einen antimikrobiellen Wirkstoffes zugegeben. Durch die Bildung der Ethergruppen werden die Löslichkeit des Vorkondensates und die mechanischen Eigenschaften des vollständig ausgehärteten Materials beeinflusst.

Der in der Lösung oder Dispersion, welche in Schritt (1) des erfindungsgemäßen Verfahrens hergestellt wird, vorliegende wenigstens eine antimikrobielle Wirkstoff ist ausgewählt aus der Gruppe bestehend aus Silbersalzen und organischen Bioziden ausgewählt aus Chloroisocyanuraten, Hydantoinen, Chlor-methyl-isothiazolinon, Parabenen, Triclosan, 2-Bromo-2-nitrotpropan-1,3-diol, Phenoxyethanol oder Hexahydrotriazinen und Mischungen davon.

Geeignete Silbersalze sind ausgewählt aus der Gruppe bestehend aus Silbernitrat, Silberacetat und Mischungen davon. Ganz besonders bevorzugt werden als antimikrobieller Wirkstoff Silbernitrat und/oder Silberacetat verwendet.

Es können auch kolloidale Dispersionen der genannten Metalle eingesetzt werden. So können beispielsweise Verfärbungen, die bei Zusatz von Silbersalzen auftreten können, durch Verwendung einer kolloidalen Dispersion von metallischem Silber unterbunden werden.

In einer bevorzugten Ausführungsform werden organische Biozide als antimikrobielle Wirkstoffe eingesetzt.

Der antimikrobielle Wirkstoff liegt in der Lösung oder Dispersion bevorzugt in einer Menge von 0,0001 bis 10 Gew.-%, besonders bevorzugt 0,001 bis 1 Gew.-%, jeweils bezogen auf das Vorkondensat, vor.

In einer weiteren bevorzugten Ausführungsform enthält die Lösung oder Dispersion zusätzlich wenigstens einen Emulgator und/oder wenigstens einen Härter.

Als Emulgator können anionische, kationische und nicht ionische Tenside sowie Mischungen davon eingesetzt werden.

Geeignete anionische Tenside sind Diphenylenoxidsulfonate, Alkan- und Alkylbenzolsulfonate, Alkylnaphthalinsulfonate, Olefinsulfonate, Alkylethersulfonate, Fettalkoholsulfate, Ethersulfate, α-Sulfofettsäureester, Acylaminoalkansulfonate, Acylisothionate, Alkylethercarboxylate, N-Acylsarcosinate, Alkyl- und Alkyletherphosphate.

Als nicht ionische Tenside können Alkylphenolpolyglykolether, Fettalkoholpolyglykolether, Fettsäurepolyglykolether, Fettsäurealkanolamide, Ethylenoxid/Propylenoxid-Blockcopolymere, Aminoxide, Glycerinfettsäureester, Sorbitanester und Alkylpolyglykoside verwendet werden.

Als kationische Emulgatoren können Alkyltriammoniumsalze, Alkylbenzyldimethylammoniumsalze und Alkylpyridiniumsalze eingesetzt werden.

Die Emulgatoren werden besonders bevorzugt in Mengen von 0,2 bis 5 Gew.-%, bezogen auf das Vorkondensat, eingesetzt.

Als Härter können acide Verbindungen eingesetzt werden, die die Weiterkondensation des Melaminharzes katalysieren. Die Mengen dieser Härter betragen 0,01 bis 20 Gew.-%, bevorzugt 0,05 und 5 Gew.-%, jeweils bezogen auf das Vorkondensat.

Geeignete acide Verbindungen sind anorganische und organische Säuren, z. B. ausgewählt aus der Gruppe bestehend aus Salzsäure, Schwefelsäure, Phosphorsäure, Salpetersäure, Ameisensäure, Essigsäure, Oxalsäure, Toluolsulfonsäuren, Amidosulfonsäuren, Säureanhydride und Mischungen davon.

Abhängig von der Wahl des Vorkondensates enthält die Lösung oder Dispersion ein Treibmittel. Dabei richtet sich die Menge des Treibmittels in der Lösung oder der Dispersion nach der erwünschten Dichte des Schaumstoffs. Prinzipiell können bei dem erfindungsgemäßen Verfahren sowohl physikalische als auch chemische Treibmittel verwendet werden. Als physikalische Treibmittel bieten sich z.B. Kohlenwasserstoffe, beispielsweise Pentan, Hexan, halogenierte, insbesondere chlorierte und/oder fluorierte Kohlenwasserstoffe, beispielsweise Methylenchlorid, Chloroform, Trichlorethan, Fluorchlorkohlenwasserstoffe, teilhalogenierte Fluorchlorkohlenwasserstoffe (H-FCKW), Alkohole, beispielsweise Methanol, Ethanol oder Isomere des Propanols, Ether, Ketone und Ester, beispielsweise Ameisensäuremethylester, Ameisensäureethylester, Essigsäuremethylester oder Essigsäureethylester, in flüssiger Form oder Luft und Kohlendioxid als Gase, an. Als chemische Treibmittel kommen z. B. Isocyanate im Gemisch mit Wasser in Frage, wobei als wirksames Treibmittel Kohlendioxid freigesetzt wird. Ferner sind Carbonate und Bicarbonate im Gemisch mit Säuren geeignet, welche ebenfalls Kohlendioxid erzeugen, sowie Azoverbindungen, wie Azodicarbonamid.

In einer bevorzugten Ausführungsform der Erfindung enthält die Lösung oder Dispersion in Schritt (1) des erfindungsgemäßen Verfahrens zusätzlich wenigstens ein Treibmittel.

Dieses Treibmittel liegt in der Lösung bzw. Dispersion bevorzugt in einer Menge von 1 bis 40 Gew.-%, bezogen auf das Vorkondensat, vor. Es wird bevorzugt ein physikalisches Treibmittel mit einem Siedepunkt zwischen 0 und 80 °C zugesetzt. Wird als bevorzugtes Treibmittel Pentan eingesetzt, so werden besonders bevorzugt 5 bis 15 Gew.-% Pentan, bezogen auf das Vorkondensat, eingesetzt.

In einer weiteren bevorzugten Ausführungsform ist die in Schritt (1) hergestellte Lösung bzw. Dispersion, abgesehen von dem wenigstens einen Vorkondensat des herzustellenden Schaumstoffes, dem wenigstens einen antimikrobiellen Wirkstoffs, des wenigstens einen Emulgators, des wenigstens einen Härters und gegebenenfalls wenigstens eines Treibmittels, frei von weiteren Zusatzstoffen. Für manche Zwecke kann es jedoch günstig sein, bis zu 20 Gew.-%, bevorzugt weniger als 10 Gew.-%, bezogen auf das Vorkondensat, übliche Zusatzstoffe, wie Farbstoffe, Flammschutzmittel, UV-Stabilisatoren, Mittel zur Herabsetzung der Brandgastoxizität oder zur Förderung der Verkohlung zuzusetzen. Da die erfindungsgemäß hergestellten Schaumstoffe im Allgemeinen offenporig sind und Wasser aufnehmen können, kann es für manche Anwendungszwecke, beispielsweise bei der Wärmedämmung oder zur Schallabsorption in Bereichen, die zur Kondenswasserbildung führen, notwendig sein, Hydrophobierungsmittel in Mengen von 0,2 bis 5 Gew.-% zuzusetzen. Geeignete Hydrophobierungsmittel sind beispielsweise Silikone, Paraffine, Silikon- und Fluortenside, Aluminiumstearate, Hydrophobine oder Fluorcarbonharze.

In einer weiteren bevorzugten Ausführungsform liegt in der in Schritt (1) des erfindungsgemäßen Verfahrens hergestellten Lösung oder Dispersion das Vorkondensat in einer Menge von 55 bis 85, besonders bevorzugt von 63 bis 80 Gew.-% vor. Die hergestellte Lösung oder Dispersion des Vorkondensates hat bevorzugt eine Viskosität von 1 bis 3000 dPas, besonders bevorzugt von 5 bis 2000 dPas.

Der wenigstens eine antimikrobielle Wirkstoff und die gegebenenfalls weiteren in der Lösung oder Dispersion vorliegenden Zusatzstoffe werden mit der Lösung oder Dispersion des Vorkondensates, bevorzugt homogen, vermischt, wobei das gegebenenfalls vorliegende Treibmittel auch unter Druck eingepresst werden kann. Man kann jedoch auch von einem festen, z. B. sprühgetrockneten Vorkondensat ausgehen und dieses dann mit einer, bevorzugt wässrigen, Lösung des antimikrobiellen Wirkstoffs, und gegebenenfalls weiterer Zusatzstoffe vermischen. Das Vermischen der Komponenten kann mit allen dem Fachmann bekannten Verfahren, z. B. in einem Extruder, vorgenommen werden. In einer bevorzugten Ausführungsform wird die Lösung oder Dispersion durch eine Düse ausgetragen und unmittelbar anschließend in Schritt (2) erhitzt und dabei verschäumt.

### Schritt (2):

Schritt (2) des erfindungsgemäßen Verfahrens umfasst das Aufschäumen des Vorkondensates durch Erhitzen der Lösung oder Dispersion aus Schritt (1), um einen Schaumstoff zu erhalten, der wenigstens einen antimikrobiellen Wirkstoff enthält.

Das Erhitzen der in Schritt (1) hergestellten Lösung oder Dispersion kann in einer bevorzugten Ausführungsform - wie in EP-B 17671 beschrieben - durch heiße Gase oder Hochfrequenzbestrahlung vorgenommen werden. Besonders bevorzugt wird das erforderliche Erhitzen durch Ultrahochfrequenzbestrahlung nach EP-B 37470 durchgeführt. Bei dieser dielektrischen Strahlung wird mit Mikrowellen im Frequenzbereich von 0,2 GHz bis 100 GHz gearbeitet. Besonders bevorzugt werden die Frequenzen von 0,915, 2,45 und 5,8 GHz eingesetzt, ganz besonders bevorzugt wird Strahlung mit einer Frequenz von 2,45 GHz verwendet. Strahlungsquelle für die dielektrische Strahlung ist das Magnetron, wobei auch mit mehreren Magnetronen gleichzeitig bestrahlt werden kann. Es ist darauf zu achten, dass bei der Bestrahlung die Feldverteilung möglichst homogen ist, um eine ungleichmäßige Erwärmung und - damit verbunden - ein ungleichmäßiges Aufschäumen zu vermeiden.

Die Bestrahlung wird bevorzugt so durchgeführt, dass die Leistungsaufnahme der Lösung oder Dispersion 5 bis 200, bevorzugt 9 bis 120 kW, jeweils bezogen auf ein Kilogramm Lösung bzw. Dispersion, beträgt. Ist die aufgenommene Leistung geringer, findet kein Aufschäumen mehr statt und die Mischung härtet nur noch aus. Innerhalb des bevorzugten Bereichs schäumt die Mischung umso schneller, je größer die Leistungsaufnahme ist. Oberhalb von etwa 200 kW pro Kilogramm Lösung oder Dispersion erhöht sich die Schäumgeschwindigkeit nicht mehr wesentlich.

Die Bestrahlung der zu verschäumenden Mischung erfolgt bevorzugt unmittelbar nachdem sie aus der Schaumdüse ausgetreten ist. Dabei wird die in Folge Temperaturerhöhung und Verdampfen des gegebenenfalls vorhandenen Treibmittels aufschäumende Mischung auf umlaufende Bänder aufgebracht, die einen Rechteck-Kanal zur Formung in entsprechende Formteile bilden.

### Schritt (3):

Der in Schritt (2) des erfindungsgemäßen Verfahrens erhaltene Schaumstoff wird in Schritt (3) des erfindungsgemäßen Verfahrens bei einer Temperatur von 120 bis 300 °C getempert, d.h. einer Temperaturbehandlung unterworfen.

In Schritt (3) werden die hergestellten Schaumstoffe bevorzugt 1 bis 180 min, besonders bevorzugt 5 bis 60 min lang auf Temperaturen von 120 bis 300 °C, bevorzugt 150 bis 250 °C erhitzt, wobei im Schaumstoff verbliebenes Lösungsmittel, Treibmittel und gegebenenfalls vorhandenes Formaldehyd weitgehend entfernt wird.

In der Praxis genügt bei den erfindungsgemäßen Schaumstoffen ein 30-minütiges Tempern bei 220 °C. Der nach der EU-Norm EN ISO 14184-1 gemessene Formaldehyd-Gehalt ist dann niedriger als 40 mg, bevorzugt niedriger als 30, besonders bevorzugt niedriger als 20 mg pro Kilogramm Schaumstoff. Bei der genannten Prüfmethode wird eine Schaumstoffprobe eine Stunde in 40 °C warmem Wasser extrahiert und der extrahierte Formaldehyd analytisch bestimmt.

Die erfindungsgemäß hergestellten elastischen Schaumstoffe weisen eine Dichte von 3 bis 50 g * I⁻¹ auf.

Der erfindungsgemäß hergestellte Schaumstoff weist folgende Vorteile auf:
- das antimikrobiell wirksame Reagenz hat keinen negativen Einfluss auf die Eigenschaften, z.B. Struktur, Mechanik, Abrasivität, des Schaumstoffs,
- der erfindungsgemäß hergestellte Schaumstoff ist physiologisch unbedenklich,
- der erfindungsgemäß hergestellte Schaumstoff ist langzeitstabil und der antimikrobielle Wirkstoff über einen langen Zeitraum wirksam,
- der erfindungsgemäß hergestellte Schaumstoff bleibt auch nach Erwärmen auf eine hohe Dauergebrauchstemperatur von 200 °C wirksam, falls anorganische Verbindungen als antimikrobielle Wirkstoffe eingesetzt werden,
- der erfindungsgemäß hergestellte Schaumstoff stört nicht bei Verwendung in einer Mikrowelle, da bei Verwendung von anorganischen Verbindungen als antimikrobielle Wirkstoffe die Menge an elementarem Metall zu gering ist bzw. die Teilchen zu klein sind.

Daher betrifft die vorliegende Erfindung auch einen Schaumstoff, herstellbar nach dem erfindungsgemäßen Verfahren.

Diese Schaumstoffe können als Platten oder Bahnen mit einer Höhe von bis zu 2 Meter hergestellt werden oder zu Schaumfolien mit einer Dicke von wenigen Millimetern verarbeitet werden.

Des Weiteren betrifft die vorliegende Erfindung ein Formteil, enthaltend einen erfindungsgemäßen Schaumstoff. Beispiele für solche Formteile sind einteilige oder partikelförmige Verpackungen für Lebensmittel oder Hygieneartikel. Weitere Beispiele sind Halterungen dünner Schaumvliese in Kombination mit anderen Schäumen, Vliesen und/oder porösen Stoffen zur Filtration. Solche Filter können beispielsweise in Belüftungsanlagen/Klimaanlagen beispielsweise in Krankenhäusern eingesetzt werden, wo durch die biozide Wirkung die Ausbreitung von Infektionskrankheiten, beispielsweise Legionellen, verlangsamt oder vermieden werden kann.

Die Erfindung betrifft auch die Verwendung eines erfindungsgemäßen Schaumstoffes zur Wärme- und Schalldämmung von Gebäuden und Gebäudeteilen, insbesondere von Zwischenwänden, aber auch von Dächern, Fassaden, Türen und Fußböden, weiterhin zur Wärme- und Schalldämmung der Innenräume von Fahrzeugen und Flugzeugen sowie zur Tieftemperaturisolierung, z. B. von Kühlhäusern, Öltanks und Behältern von Flüssiggas. Weitere Anwendungsgebiete sind die Verwendung als isolierende Wandverkleidung sowie als isolierendes und stoßdämmendes Verpackungsmaterial. Aufgrund der hohen Härte vernetzter Melaminharze können die Schaumstoffe auch für leicht abrasiv wirkende Reinigungs-, Schleif- und Polierschwämme eingesetzt werden. Die offenzellige Struktur der Schaumstoffe erlaubt zusätzlich die Aufnahme und Speicherung geeigneter Reinigungs-, Schleif- und Poliermittel im Innern der Schaumstoffe. Auch können die Schwämme für spezielle Reinigungsaufgaben hydrophob und oleophob ausgerüstet werden. Wegen der extrem niedrigen Formaldehyd-Emissionen und dem Vorliegen wenigstens eines antimikrobiellen Wirkstoffes lassen sich die erfindungsgemäßen Schaumstoffe auch im Hygienesektor, z. B. in Form von dünnen Vliesen als Wundverband oder als Bestandteil von Babywindeln und Inkontinenzprodukten, einsetzen. Des Weiteren kann der erfindungsgemäße Schaumstoff als Filtermaterial verwendet werden.

### Beispiele:

Zur Herstellung eines modifizierten Melaminharzschaumstoffes, bei dem die antimikrobielle Ausrüstung simultan zur Verschäumung erfolgt, wird folgendermaßen vorgegangen:

### Beispiel 1:

70 Gew.-% eines sprühgetrockneten Melaminharzes (Molverhältnis 1 : 1,6) werden in 30 Gew.-% Wasser gelöst. Dieser Harzlösung werden 3 Gew.-% eines Emulgators aus einem ethoxylierten Fettalkohol (mehr als 20 Ethylenoxideinheiten) sowie 3 Gew.-% Ameisensäure und 10 Gew.-% Pentan, jeweils bezogen auf Harz, zugesetzt. Zu diesem treibmittelhaltigen Melamin-Formaldehyd-Vorkondensat werden 0,001 Gew.-%, 0,01 Gew.-% oder 0,1 Gew.-% Silbernitrat, bezogen auf das Vorkondensat, zugesetzt. Die Mischung wird kräftig gerührt und anschließend in einer Schäumform aus Polypropylen durch Einstrahlung von Mikrowellenenergie bei 2,54 GHz verschäumt. Der erhaltene Schaumstoff wird bei einer Temperatur von 180 °C für 60 Minuten nachbehandelt.

### Beispiel 2:

In Beispiel 2 wird analog zu Beispiel 1 vorgegangen, jedoch wird als antimikrobieller Wirkstoff Silberacetat in den gleichen Mengen zugesetzt.

Im Vergleich zu Schäumen ohne Silbersalzzusatz weisen die hergestellten Materialien keine Beeinträchtigungen hinsichtlich der der mechanischen Eigenschaften oder der Schaumstruktur auf. Aufgrund der unbeeinträchtigten Struktur ergibt sich, dass auch das Schallabsorbtionsverhalten und die abrasive Reinigungswirkung nicht beeinträchtigt werden.

## Patentansprüche

1. Verfahren zur Herstellung eines Schaumstoffes auf Basis eines Melamin/Formaldehyd-Kondensationsproduktes, enthaltend wenigstens einen antimikrobiellen Wirkstoff, umfassend die Schritte:
(1) Herstellen einer Lösung oder Dispersion enthaltend wenigstens ein sulfitgruppenfreies Vorkondensat des herzustellenden Schaumstoffes mit einem Molverhältnis von Melamin zu Formaldehyd von 1 : 1,3 bis 1 : 1,8 und wenigstens einen antimikrobiellen Wirkstoff,
(2) Aufschäumen des Vorkondensates durch Erhitzen der Lösung oder Dispersion aus Schritt (1), um einen Schaumstoff zu erhalten, der wenigstens einen antimikrobiellen Wirkstoff enthält und
(3) Tempern des in Schritt (2) erhaltenen Schaumstoffes bei einer Temperatur von 120 bis 300 °C, wobei der wenigstens eine antimikrobielle Wirkstoff ausgewählt ist aus der Gruppe bestehend aus Silbersalzen und organischen Bioziden ausgewählt aus Chloroisocyanuraten, Hydantoinen, Chlor-methyl-isothiazolinon, Parabenen, Triclosan, 2-Bromo-2-nitro-propan-1,3-diol, Phenoxyethanol, Hexahydrotriazinen und Mischungen davon.

2. Verfahren nach Anspruch 1, **dadurch gekennzeichnet, dass** die Lösung in Schritt (1) zusätzlich wenigstens einen Emulgator und/oder wenigstens einen Härter enthält.

3. Verfahren nach Anspruch 1 oder 2, **dadurch gekennzeichnet, dass** die Lösung oder Dispersion in Schritt (1) zusätzlich wenigstens ein Treibmittel enthält.

4. Verfahren nach einem der Ansprüche 1 bis 3, **dadurch gekennzeichnet, dass** das Erhitzen durch heiße Gase oder Hochfrequenzbestrahlung vorgenommen wird.

5. Verfahren nach einem der Ansprüche 1 bis 4, **dadurch gekennzeichnet, dass** der wenigstens eine antimikrobielle Wirkstoff in der Lösung oder Dispersion in einer Menge von 0,0001 bis 10 Gew.-%, bezogen auf das Vorkondensat, vorliegt.

6. Schaumstoff herstellbar nach dem Verfahren gemäß einem der Ansprüche 1 bis 5.

7. Formteil, enthaltend einen Schaumstoff nach Anspruch 6.

8. Verwendung eines Schaumstoffes nach Anspruch 6 zur Wärme- und Schalldämmung von Gebäuden und Gebäudeteilen, Wärme- und Schalldämmung der Innenräume von Fahrzeugen und Flugzeugen, Tieftemperaturisolierung, als isolierende Wandverkleidung, als isolierendes und stoßdämmendes Verpackungsmaterial, als abrasiv wirkende Reinigungs-, Schleif- und Polierschwämme, im Hygienesektor und als Filtermaterial.

## Claims

1. A process for producing a foam based on a melamine-formaldehyde condensation product, comprising at least one antimicrobial active, comprising the steps of:
(1) preparing a solution or dispersion comprising at least one precondensate of the foam to be produced, said precondensate being free of sulfite groups and having a molar ratio of melamine to formaldehyde of from 1:1.3 to 1:1.8, and at least one antimicrobial active,
(2) foaming the precondensate by heating the solution or dispersion of step (1) to obtain a foam comprising at least one antimicrobial active, and
(3) heat treating the foam obtained in step (2) at a temperature in the range from 120 to 300°C, where the at least one antimicrobial active is selected from the group consisting of silver salts and organic biocides selected from chloroisocyanurates, hydantoins, chloromethyl-isothiazolinone, parabens, triclosan, 2-bromo-2-nitropane-1,3-diol, phenoxyethanol, hexahydrotriazines and mixtures thereof.

2. The process according to claim 1 wherein the solution in step (1) further comprises at least one emulsifier and/or at least one hardener.

3. The process according to claim 1 or 2 wherein the solution or dispersion in step (1) further comprises at least one blowing agent.

4. The process according to any one of the claims 1 to 3 wherein the heating is effected via hot gases or high frequency irradiation.

5. The process according to any one of the claims 1 to 4 wherein the at least one antimicrobial active is present in the solution or dispersion in an amount ranging from 0.0001% to 10% by weight, based on the precondensate.

6. A foam obtainable by the process according to any one of the claims 1 to 5.

7. A shaped article comprising a foam according to claim 6.

8. The use of a foam according to claim 6 for thermal and acoustical insulation of buildings and parts of buildings, thermal and acoustical insulation of the interiors of land, air and sea vehicles, low-temperature insulation, as an insulating wall cladding, as an insulating and shock-absorbing packaging material, as abrasive cleaning, grinding and polishing sponges, in the hygiene sector and as a filter material.

## Revendications

1. Procédé de fabrication d'une mousse à base d'un produit de condensation mélamine/formaldéhyde, contenant au moins un agent actif antimicrobien, comprenant les étapes suivantes :
(1) la fabrication d'une solution ou dispersion contenant au moins un précondensat exempt de groupes sulfite de la mousse à fabriquer, ayant un rapport molaire entre la mélamine et le formaldéhyde de 1:1,3 à 1:1,8, et au moins un agent actif antimicrobien,
(2) le moussage du précondensat par chauffage de la solution ou dispersion de l'étape (1) pour obtenir une mousse qui contient au moins un agent actif antimicrobien, et
(3) le recuit de la mousse obtenue à l'étape (2) à une température de 120 à 300 °C, ledit au moins un agent actif antimicrobien étant choisi dans le groupe constitué par les sels d'argent et les biocides organiques choisis parmi les chloroisocyanurates, les hydantoïnes, la chloro-méthyl-isothiazolinone, les parabènes, le triclosan, le 2-bromo-2-nitro-propane-1,3-diol, le phénoxyéthanol, les hexahydrotriazines et leurs mélanges.

2. Procédé selon la revendication 1, **caractérisé en ce que** la solution à l'étape (1) contient en outre au moins un émulsifiant et/ou au moins un durcisseur.

3. Procédé selon la revendication 1 ou 2, **caractérisé en ce que** la solution ou dispersion à l'étape (1) contient en outre au moins un agent gonflant.

4. Procédé selon l'une quelconque des revendications 1 à 3, **caractérisé en ce que** le chauffage est réalisé par des gaz chauds ou une exposition à un rayonnement haute fréquence.

5. Procédé selon l'une quelconque des revendications 1 à 4, **caractérisé en ce que** ledit au moins un agent actif antimicrobien est présent dans la solution ou dispersion en une quantité de 0,0001 à 10 % en poids, par rapport au précondensat.

6. Mousse, pouvant être fabriquée par le procédé selon l'une quelconque des revendications 1 à 5.

7. Pièce moulée, contenant une mousse selon la revendication 6.

8. Utilisation d'une mousse selon la revendication 6 pour l'isolation thermique et sonore de bâtiments et de parties de bâtiments, l'isolation thermique et sonore de l'espace intérieur d'automobiles et d'avions, l'isolation à basse température, en tant que revêtement mural isolant, en tant que matériau d'emballage isolant et amortissant les chocs, en tant qu'éponge abrasive pour le nettoyage, le ponçage et le polissage, dans le secteur de l'hygiène et en tant que matériau de filtration.
